(19) Europäisches Patentamt
European Patent Office
Office européen des brevets

(11) Publication number: **0 442 166 A1**

(12) # EUROPEAN PATENT APPLICATION

(21) Application number: 90203497.4

(22) Date of filing: 24.12.90

(51) Int. Cl.5: C08K 5/357, C09K 9/02, G01J 1/02, G03C 1/73

(30) Priority: 16.02.90 IT 1938990

(43) Date of publication of application: 21.08.91 Bulletin 91/34

(84) Designated Contracting States: AT BE CH DE DK ES FR GB GR LI LU NL SE

(71) Applicant: ENICHEM SYNTHESIS S.p.A.
Via Ruggero Settimo 55
I-90139 Palermo(IT)

(72) Inventor: Traverso, Enrico
Via Monte Bianco 22
I-20052 Monza (Milan)(IT)
Inventor: Busetto, Carlo
Via Morandi 11/E
I-20097 San Donato Milanese (Milan)(IT)
Inventor: Crisci, Luciana
Via Statuto 2
I-20079 Sant'Angelo Lodigiano (Milan)(IT)
Inventor: Renzi, Fiorenzo
Via Dante 1
I-20064 Gorgonzola (Milan)(IT)
Inventor: Allegrini, Pietro
Via Europa 34
I-20097 San Donato Milanese (Milan)(IT)
Inventor: Castaldi, Graziano
Via Callina 5
I-28072 Briona (Novara)(IT)

(74) Representative: Roggero, Sergio et al
Ing. Barzanò & Zanardo Milano S.p.A. Via Borgonuovo 10
I-20121 Milano(IT)

(54) **Illuminometers containing photochromatic substances.**

(57) Disclosed are instruments for measuring light intensity, the so-said "illuminometers", which are constituted by a suitably shaped polymeric material containing, either coated on its surface, or incorporated inside its mass, at least one photochromatic compound belonging to the class of spiro-indolino-naphthooxazines and definable by the following general formula (I):

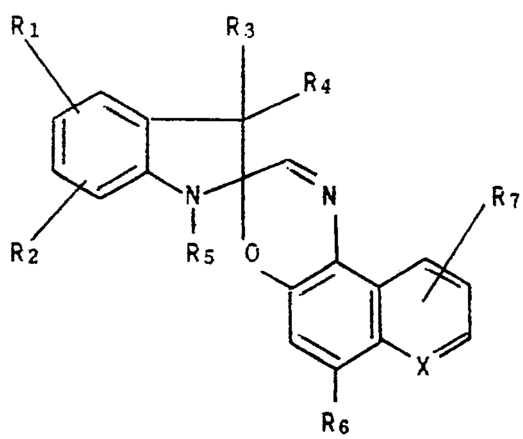

(I)

in which the various substituents have the meanings as reported in the following disclosure.

EP 0 442 166 A1

The present invention relates to devices termed "illuminometers", suitable for measuring the intensity of light, which devices are essentially constituted by a polymeric material having a suitable shape and containing, either coated on its surface, or incorporated inside its mass, at least one photochromatic compound belonging to the class of spiro-indolino-naphthooxazines.

As known, the traditional illuminometers measure the intensity of light flux. Light energy striking on a sensitive element generally constituted by compounds on selenium basis, is converted into electrical energy. The reading is carried out by a mobile-pointer digital system, by translating the detected values through suitable measure units, i.e.:

- Lux
- $Watt/m^2$ corresponds to 682 Lux
- $\mu E.m^{-2}.sec^{-1}$.This is the unity of measure for the density of the flux of photons (1 $\mu E = 6.0022x10^{-17}$ photons).

Although such instruments are precise, their overall dimensions are large and the instruments are quite expensive. When the purpose of the measurement is a simple preliminary approach for cognitive purposes, their use becomes evidently disadvantageous.

The present Applicant has found now that the density of light flux can be measured by means of a body made from a polymeric material, with small overall dimensions, previously treated with a photochromatic substance, the characteristic of which is of assuming a well determined colour when it is exposed to either direct or indirect light. The intensity of such colour is proportional to light intensity.

In fact, the object of the present invention is an illuminometer constituted by a polymeric material in the form of a suitably shaped body, containing, either coated on its surface or incorporated inside its mass, one or more photochromatic substances belonging to the class of spiro-indolino-naphthooxazines.

Particular advantages were attained when photochromatic substances were used, which have the following general formula (I):

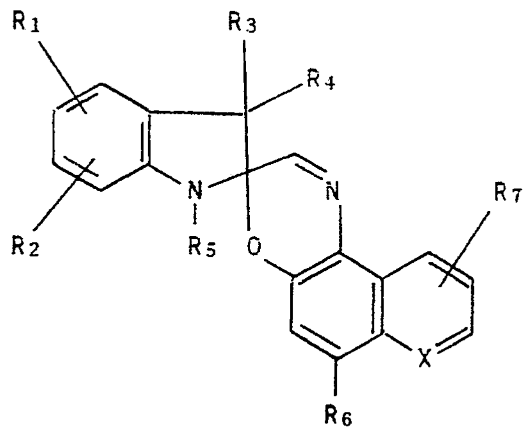

(I)

in which

$R_1$ and $R_2$ independently represent a hydrogen atom or a halogen atom (fluorine, chlorine or bromine), or a radical selected from among: linear or branched ($C_1$-$C_5$)-alkyl, ($C_1$-$C_5$)-alkoxy, nitro or cyano;

$R_3$ and $R_4$ independently represent linear or branched ($C_1$ -$C_5$)-alkyl groups, phenyl or benzyl; or $R_3$ and $R_4$, considered together, and jointly with the carbon atom they are linked to, form a ($C_5$-$C_8$)-cycloalkyl group;

$R_5$ represents a linear or branched ($C_1$-$C_5$)-alkyl group, phenyl, benzyl or allyl;

$R_6$ represents a hydrogen atom or a linear or branched ($C_1$-$C_5$)-alkyl group, or the group

$-NR_8R_9$,

in which

$R_8$

is a linear or branched ($C_1$-$C_5$)-alkyl group, phenyl or benzyl;

$R_9$

is hydrogen, or has the same meaning as of $R_8$, or

$R_8$ and $R_9$,
considered together, and jointly with the nitrogen atom they are linked to, form a cyclic structure of from 5 to 12 members, optionally containing a further heteroatom selected from the group consisting of oxygen and nitrogen;

$R_7$ represents a hydrogen atom or a halogen atom (fluorine, chlorine or bromine), or a radical selected from among: linear or branched ($C_1$-$C_5$)-alkyl, ($C_1$-$C_5$)-alkoxy, cyano, mercapto, carboxylate ester with 1-3 carbon atoms in the ester moiety, or $R_7$ represents a fused aromatic or heterocyclic ring; and

X represents either =CH- or =N-.

In particular, the $R_1$ and $R_2$ groups, when are not hydrogen, can be linked in any of 4-, 5-, 6- and 7-positions of the indolinic moiety of the molecule. Furthermore, the group $R_7$, when does not represent hydrogen or a fused aromatic or heterocyclic ring, can be present in any of 7'-, 8'-, 9'- and 10'-positions of the naphthenic moiety of the molecule.

In the preferred form of practical embodiment, photochromatic compounds corresponding to the general formula (I) are used, in which:

$R_1$ and $R_2$ independently represent the hydrogen atom or the methyl group;

$R_3$ and $R_4$ represent two methyl groups or jointly represent the cyclohexyl group;

$R_5$ represents the methyl group;

$R_6$ represents the hydrogen atom or the group

$-NR_8R_9$

and the groups
$R_8$ and $R_9$,
together with the nitrogen atom to which they are linked, form a ring structure selected from the group consisting of piperidyl, morpholyl, pyrrolidyl, or hexamethylene-imino;

$R_7$ represents the hydrogen atom; and

X represents =CH-.

Furthermore, still in the preferred form of practical embodiment, the groups $R_1$ and $R_2$, when they do not represent hydrogen, are linked to the 5- and 6-positions of the molecule.

The following are examples of preferred photochromatic compounds used according to the present invention:

1,3,3,5,6-pentamethyl-spiro-{indolino-2,3'-[3H]-naphtho-(2,1-b)-(1,4)-oxazine}; 1,3,3-trimethyl-spiro-{indolino-2,3'-[3H]-naphtho-(2,1-b)-(1,4)-oxazine}; 1,3,3-trimethyl-spiro-{indolino-6'-(1-piperidyl)-2,3'-[3H]-naphtho-(2,1-b)-(1,4)-oxazine}; 1,3,3-trimethyl-spiro-{indolino-6'-(1-morpholyl)-2,3'-[3H]-naphtho-(2,1-b)-(1,4)-oxazine}; 1,3,3,4,5- or 1,3,3,5,6-pentamethyl-spiro-{indolino-6'-(1-piperidyl)-2,3'-[3H]-naphtho-(2,1-b)-(1,4)-oxazine}; and 1,3,3-trimethyl-spiro-[indolino-6'-(1-piperidyl)-9'-methoxy]-2,3'[3H]-naphtho-(2,1-b)-(1,4)-oxazine.

The photochromatic compounds falling within the scope of the above general formula (I) can be obtained by methods known from the prior art.

As regards such compounds and some processes to produce them, reference may be had to European patent applications No. 88202408.9 filed on October 28, 1988 and No. 88201629.8 filed on July 28, 1988 in the name of the same Applicants: the interesting passages of the disclosures enclosed with said patent applications are incorporated by right in the specification of the present invention.

Going back to the illuminometer which constitutes the subject-matter of the latter, the colour change, relatively to the basic colour of the body when said body is not exposed to light, can be quantified by the parameter $\Delta E$, defined by tristimulus colorimetry, and which reproduces the changes of "HUE", "CHROMA" and "LIGHTNESS". These symbols have the following meanings: "HUE" corresponds to colour tone; "CHROMA" corresponds to the chromatic saturation; and "LIGHTNESS" corresponds to the brightness of colour.

Therefore, a slab can operate as an illuminometer when on it a series of fixed chromatic references -- each characterized by a value of $\Delta E$ of its own -- are reported, which correspond to the precise colours which the same slab assumes when said slab is exposed to different intensities of light flux as measured by a traditional illuminometer.

Therefore, each of the chromatic references and its $\Delta E$ correspond to a precise value of LUX.

The values of $\Delta E$ relevant to the corresponding intensities of light flux are generally reached within an exposure time of approximately 2 minutes.

The photochromatic effect is reversible. When the action of the light source on the slab ends, said slab returns back to its basic colour within a time of approximately three minutes.

The photochromatic products belonging to the class of spiro-indolino-naphthooxazines are activated by U.V. light, at wavelengths generally comprised within the range of from 330 to 375 nm.

Therefore, the ideal source is sun, in that its emission spectrum contains all these U.V. wavelengths.

Also other sources can be used, provided that their emission spectra comprise the U.V. wavelength(s) characteristics for the photochromatic product used.

The typical photochromatic compounds preferably used in the practical embodiments of the device according to the present invention are the following:

"A" Product:

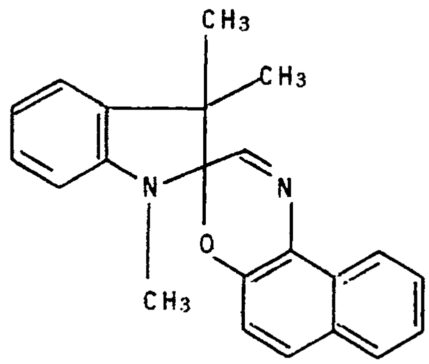

- activation $\lambda_{max}$ 346 nm.

"B" Product:

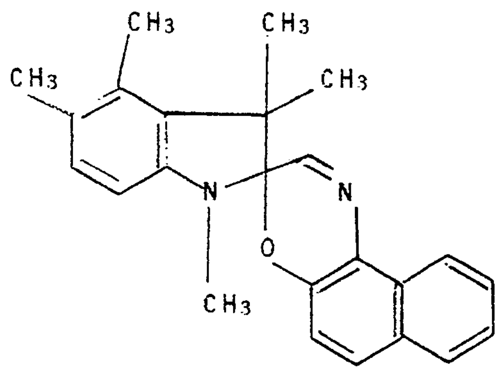

- activation $\lambda_{max}$ 345 nm.

"C" Product:

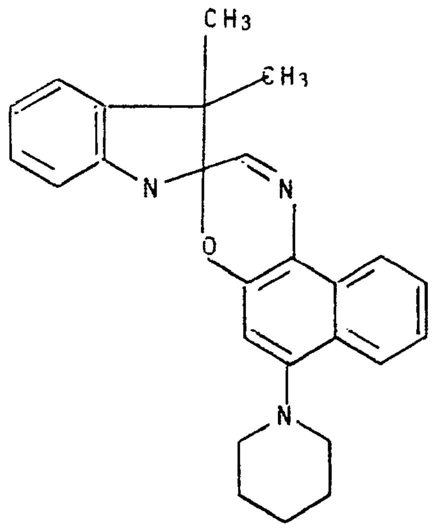

- activation $\lambda_{max}$ 364 nm.

The above disclosed photochromatic products are hence used to manufacture illuminometers made from organic polymeric materials. The organic polymers which are most suitable for the intended purpose are:

- polypropylene and polyethylene;
- rigid or plastified poly(vinyl chloride);
- cellulose esters: acetate, acetate-butyrate, etc.;
- polystyrene;
- ethylene-vinyl acetate;
- poly(methyl methacrylate);
- polymer of diethyleneglycol-bis(allyl carbonate) (also indicated by the short name "RAV 7" in the following);
- polycarbonate;
- polyurethane.

The application of the photochromatic compound can be carried out in different ways, and more particularly:

- by bulk-addition as an additive to the starting polymer, in an amount of from 0.01 to 1% by weight and preferably comprised within the range of from 0.02 to 0.5% by weight relatively to the weight of the polymer, caring that the temperature during the processing does not exceed a certain value corresponding to the threshold temperature of thermal stability of the photochromatic product used. For example, for "A" product this temperature limit value is 180°C, for "C" product it is 230°C.
- Mixing in an amount of from 0.01 to 2% by weight and preferably comprised within the range of from 0.02 to 1% by weight, in an organic painting product selected from those customarily used in the art (for example, to polyurethane, chlorinated rubber, alkyd, acryl, cellulose-ester paints) and application spray coating onto the surface of the slab or film;
- Mixing in an amount of from 0.1 to 10% by weight and preferably of from 1 to 7% by weight in a colourless ink basis selected from those customarily used in the art, and application to the slab or film surface by the usual printing techniques (silk-screen printing, flexographic printing, and so forth);
- adsorption of the photochromatic compound on the surface of the slab or film by dipping said surface in an organic solution (e.g., in toluene) containing, by weight, from 0.01 to 5% and preferably from 0.05 to 3% of photochromatic compound, followed by drying.

The polymeric material inside which, or to which the photochromatic product is incorporated or applied, may contain inorganic opacifier products, e.g., $TiO_2$, in such amounts as not to jeopardize a significant penetration of the activating radiations.

In any cases, by operating as indicated above, slabs or films are obtained which, when exposed to sun light, reversibly assume a colour which depends on the photochromatic compound used, on the nature of the organic polymer and also on the contents of stable-hue dyes already contained inside the same polymer.

Not coloured slabs of "RAV 7" polymer respectively treated by adsorption with the above specified

photochromatic products "A", "B" and "C", when exposed to sun light, assume the following colour:

"A" product: blue colour. Absorption peak in the visible range at 620 nm; activation $\lambda$ = 346 nm.

"B" product: blue colour. Absorption peak in the visible range at 620 nm; activation $\lambda$ = 345 nm.

"C" product: violet-blue colour. Absorption peak in the visible range at 580 nm; activation $\lambda$ = 364 nm.

When a slab of RAV 7 inside which a stable yellow dye is incorporated is treated with the "B" photochromatic product, the resulting colour when the slab is exposed to sun light is green.

When it is exposed to sun light, a sheet of polypropylene containing the "C" product incorporated inside its mass assumes a red-violet colour, different from the colour of the corresponding slab of RAV 7, which is violet-blue.

To increase the light stability of the above disclosed photochromatic products, stabilizer additives can be added to the polymers inside which they are incorporated or to which the applied. Such stabilizer additives generally are hindered cyclic amines (HALS) and their amounts are from 2 to 5 times larger than of the photochromatic product.

The half time of photochromatic activity shows a 3-6 fold increase.

A typical hindered amine is UVASIL 299, which is a poly-methylpropyl-3-oxy-[4-(2,2,6,6-tetramethyl)-piperidinyl]-siloxane (disclosed in the European patent No. 0 162 524 filed on May 15, 1985 in the name of the same Applicants).

In its final form, the illuminometer-slab can be prepared in single-layer or multi-layer versions:

- Single-layer version: is prepared as described hereinabove. The chromatic references, graphic patterns/charts and descriptions can be printed on the surfaces of the slabs by screen-printing or other printing techniques.
- Multi-layer version: the photochromatic layer can be incorporated in sandwich-like fashion inside another polymeric, transparent, possibly coloured material. The colour references and the descriptions are printed on the external layers.

The layers are applied on each other by high-temperature compression, co-extrusion, adhesive-bonding.

The following may be exemplary thereof:

- Photochromatic PVC film, inserted by hot-compression between two PVC sheets;
- Photochromatic film of polypropylene inserted by adhesive-bonding between two PVC sheets.

The maximum chromatic intensities (i.e., the peak values for $\Delta$ E) are generally reached for relatively low sun light flux densities, generally comprised within the range of from 10 to 20,000 LUX.

On the contrary, the maximal flux density of sun light may reach even higher values than 100,000 LUX.

To suitably carry out measurements also within the range of from 10,000 to 100,000 LUX, the sensitivity of the photochromatic product should be reduced.

For that purpose, the photochromatic product may be shielded with an UV-absorber, in an amount from 2 to 10 times larger than the amount of the same photochromatic product.

The UV-absorber, generally belonging to the class of hydroxy-benzophenones or of hydroxy-benzotriazoles, can be incorporated inside the photochromatic layer into direct contact with the photochromatic product, or it can be incorporated inside a layer of transparent polymeric material applied above the photochromatic layer.

The decrease in photochromatic response may be also obtained by adding a suitable amount of an opacifier product, such as, e.g., $TiO_2$, either inside the mass, into contact with the photochromatic product, or incorporated inside a layer of partially transparent polymeric material applied above the photochromatic layer.

An interesting case of application of the photochromatic illuminometer is the measurement of the density of sun light flux inside interiors, inside which generally values not higher than 5,000 LUX are reached, to identify the best position where plants should be placed.

In this case, the "C" photochromatic product, incorporated inside polypropylene, is the ideal product in that the glass of windows is transparent for those U.V. wavelengths which activate the same product (360-375 nm).

In all cases, the temperature at which the measurement is carried out should suitably not exceed the value of 25° C. At higher temperatures, the photochromatic effect decreases, and becomes zero at temperatures higher than 45° C.

Besides the fixed chromatic references of intensity of photochromatic effect, other chromatic references may be reported on the photochromatic illuminometer. Among them, the following may be cited for exemplifying purposes:

- Patterns or figures made from ink or thermochromatic materials, e.g., on liquid-crystal basis, whose hue varies as a function of environmental temperature, to detect said temperature.

- Patterns or figures made from ink or from materials whose hue varies as a function of environmental humidity level, to detect said humidity level.

Example No. 1

0.5 g of "B" photochromatic compound is dissolved in 100 g of the polyol component (based on a hydroxy-acryl resin) of a flexible, colourless urethane paint of commercial type.

This polyol component contains 200-300 ppm of a catalyst consisting of a dialkyl-diacyloxy-stannane.

To this polyol component, 25 g of isocyanate component is added (DESMODUR-N, a product by Bayer).

The so obtained mixture is diluted with acetic esters and two coats of it are applied by spraying onto one of the faces of a transparent, colourless slab of PMMA of rectangular shape (of 2 mm of thickness).

The layer of paint is then caused to dry and polymerize at 20° C for 12 hours and at 70° C for a further 12 hours. The dry layer is of 90 microns of thickness.

The other face of the slab is then coated, in the conventional way, by spray-applying two coats of a white-pigmented polyurethane paint. This layer, of 100 microns of thickness when dry, supplies opacity and contrast to the colour developed on the other face of the slab when the latter is exposed to light.

The slab, when exposed outdoor to the action of sun light at 20° C, turns into a blue colour, with its saturation ("chroma") increasing with increasing densities of light flux. The peak value of the chromatic intensity ($\Delta E_{max}$) is reached at about 50,000 LUX.

In all cases, the time to the peak chromatic activation, compatible with the respective density of light flux, is of about 1 minute, and the return time of the slab to its colourless state is of about 1 minute and 30 seconds.

Example No. 2

A transparent and colourless slab of RAV 7 [a polymer of diethyleneglycol-bis-(allyl carbonate)] of rectangular shape, of 2 mm of thickness, is kept dipped for a 30-minute time in a solution at 2% by weight of "B" photochromatic compound in toluene, under refluxing conditions at 110° C.

The treated slab is then dried in an oven at 70° C, for 3 hours.

A face of the slab is then spray-painted with two coats of a white-coloured polyurethane paint. The paint layer has a thickness of about 100 microns when dry.

When exposed outdoor to the action of sun light at 20° C, the so treated slab shows a similar behaviour to the slab of Example 1 as for hue, chromatic intensity as a function of LUX values, activation times and times of return back to the colourless state.

Example No. 3

A slab of transparent, yellow-coloured poly(methyl methacrylate), of rectangular shape and 2 mm of thickness, is kept dipped for 30 minutes in a solution at 2% by weight of "B" photochromatic product in silicone oil, by operating at 100° C.

The treated plate is subsequently oven-dried at 70° C for 3 hours.

A face of the slab is then spray-painted with two coats of a white polyurethane paint. The layer of dry paint has a thickness of about 100 microns.

When exposed outdoor to the action of sun light at 20° C, the so treated slab shows a green dominant hue, and is yellow-green at low densities of light flux and green-blue at high densities of light flux.

The peak value of chromatic intensity ($\Delta E_{max}$) is reached at approximately 50,000 LUX.

In all cases, peak chromatic activation, compatible with the respective density of light flux, is reached after an exposure time of about 1 minute, and the return time to the yellow basic state is of about 1 minute and 30 seconds.

Example No. 4

7 g of "A" photochromatic product is dissolved by prolonged stirring in 100 g of a colourless, transparent liquid base for silk-printing inks for PVC, suitably diluted with the solvent down to a viscosity of 7,000 cP.

The so prepared photochromatic ink is applied by the silk-printing technique, to a portion of one of the two faces of a white-coloured, opaque slab of semirigid PVC, of rectangular shape and 0.5 mm of thickness.

The screen-printed pattern is a lanceolate leaf image.

In the absence of sun light flux, the treated face is perfectly white.

When the slab is exposed outdoor to the action of sun light at 20° C, the leaf-like pattern of light blue colour appears. The chromatic intensity increases with increasing values of the density of the light flux, and reaches its peak value at about 40,000 LUX.

In all cases, the time required to reach the peak chromatic activation, compatible with the respective density of light flux, is of about 30 seconds, and the slab return time to its white basic state is of about 1 minute.

Example No. 5

500 g of a blend of powders having the following composition:

| | |
|---|---|
| - FL-F20 polypropylene grade 14-16 (HIMONT) | 99.1 % |
| - UVASIL 299, supported on 25% of AEROSIL 300 silica (DEGUSSA) | 0.65% |
| - Photochromatic product "C" | 0.25% |

is prepared by careful mixing.

The mixture is processed in a BRABENDER screw extruder, laboratory model.

The extruder head is equipped with a filming slit device.

The temperature of the extruder head is of 210° C.

A transparent, colourless film of 8 cm of width and 200 microns of thickness is prepared.

The film is flame-treated, and then by punching, square pieces of 25 mm of side are prepared from it.

The piece of square shape is inserted between two sheets of opaque, white-coloured, semi-rigid PVC of rectangular shape, of 86 x 54 mm of size and 200 microns of thickness. Through one of the sheets a window having the same dimensions as of the punched polypropylene film -- inside which window said film is housed -- is provided.

Above the sheet with the window, another sheet of transparent, colourless PVC is applied.

The sandwich-structure is sealed by adhesive-bonding with a single-component, solvent-polyisocyanate adhesive agent.

When exposed outdoor, at 20° C, to the action of sun light, the so obtained slab assumes a violet-pink colour in the region exposed inside the window.

The chromatic intensity increases with increasing values of light flux density. The peak chromatic intensity ($\Delta E_{max}$) is reached at approximately 15,000 LUX.

In all cases, the time required to reach the peak chromatic activation, compatible with the respective density of light flux, is of about 2 minutes, and the slab return time to its colourless state is of about 3 minutes.

Example No. 6

10 kg of of a blend of powders having the following composition:

- FL-F20 polypropylene (HIMONT) 98.6 %
- UVASIL 299, supported on 25% of AEROSIL 380 silica (DEGUSSA) 0.65%
- $TiO_2$ 0.5 %
- Photochromatic product "C" 0.25%

is prepared in a planetary mixer.

The mixture is submitted to fabrication in an injection-moulding press.

The temperature of the screw head zone is of 210°C.

The molten material is pressure-injected into a mould, by operating in continuous-cycle mode.

A plurality of white slabs, not completely opaque to light are prepared. The slabs have a square shape of 15 cm x 15 cm, and are of 1 mm in thickness.

By punching, from each slab two rectangular slabs of 86 x 54 mm are prepared.

One face of the slab is coated with a double passage of high-pigment, white-coloured silk-printing ink, to produce a solid inked region on the whole surfaces of said face.

When exposed to the action of sun light within a temperature range of from 14 to 24°C, both outdoor and indoor -- in the latter case, through glass windows --the so obtained slab assumes a violet-pink colour in the region exposed through the window, with a chromatic intensity variable as a function of light flux density values.

The LUX value at the maximal chromatic intensity obtainable, the chromatic activation time and the time to return back to the colourless state are as reported in Example No. 5.

Example No. 7

In the instant example, a specific illuminometer for measuring the density of sun light flux inside interiors -- inside which values are generally reached, which do not exceed 5,000 LUX -- is disclosed. The illuminometer is specifically used to determine the best position for placing ornamental plants.

On both faces of the photochromatic polypropylene slab, of 86 mm x 54 mm and 1 mm of thickness, prepared as described in Example No. 6, drawings, chromatic references, a chart, explanations and various writings are reported exclusively by silk-screen printing.

In greater detail:

- On the front, photochromatic face
  * a green frame along the peripheral edges of the slab, of 6 mm of width. Inside the frame, the writing GREEN POWER CARD appears;
  * a LUX vs. ΔE chart;
  * five fixed chromatic references of violet-pink colour, with different saturation (chroma) values, corresponding to the precise colours which the slab will assume when exposed to light, at the LUX values reported in the following table:
    - Reference 1: ΔE = 7.73; 300 LUX
    - Reference 2: ΔE = 13.24; 500 LUX
    - Reference 3: ΔE = 21.34; 1000 LUX
    - Reference 4: ΔE = 36.53; 2000 LUX
    - Reference 5: ΔE = 50.05; 4000 LUX

    The values for ΔE are obtained by reference to the white colour which can be observed when the slab is not activated.
- On the back, white-coloured, not photochromatic face
  * a green frame, along the peripheral edges of the slab, of 6 mm of width;
  * description of the conditions and modalities of use and storage of the slab;
  * a list of ornamental plants, and of the respective range of LUX values at which the light conditions are regarded as optimum for the life of the same plants:

| | |
|---|---|
| 200- 400 LUX: | Aglaonema, Dracaena fragrans, Philodendron |
| 400- 600 LUX: | Chamaedorea, Cissus, Dracaena deremensis |
| 600- 800 LUX: | Dieffenbachia, Hedera, Schefflera arboricola |

| | |
|---|---|
| 800-1000 LUX: | Begonia, Peperomia, Yucca elephantipes |
| 1000-2000 LUX: | Croton, Ficus Starlight, Hibiscus |

## Claims

1. Illuminometer constituted by polymeric material containing, either coated on its surface or incorporated inside its mass, one or more photochromatic substances belonging to the class of spiro-indolino-naphthooxazines.

2. Illuminometer according to the preceding claim, in which the photochromatic substances are selected from those falling within the scope of the following general formula (I):

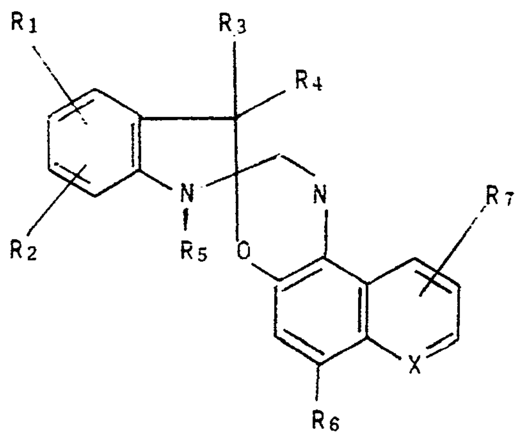

(I)

in which

$R_1$ and $R_2$ independently represent a hydrogen atom or a halogen atom (fluorine, chlorine or bromine), or a radical selected from among: linear or branched ($C_1$-$C_5$)-alkyl, ($C_1$-$C_5$)-alkoxy, nitro or cyano;

$R_3$ and $R_4$ independently represent linear or branched ($C_1$-$C_5$)-alkyl groups, phenyl or benzyl; or $R_3$ and $R_4$, considered together, and jointly with the carbon atom they are linked to, form a ($C_5$-$C_8$)-cycloalkyl group;

$R_5$ represents a linear or branched ($C_1$-$C_5$)-alkyl group, phenyl, benzyl or allyl;

$R_6$ represents a hydrogen atom or a linear or branched ($C_1$-$C_5$)-alkyl group, or the group

$-NR_8R_9$,

in which

$R_8$

is a linear or branched ($C_1$-$C_5$)-alkyl group, phenyl or benzyl;

$R_9$

is hydrogen, or has the same meaning as of $R_8$, or

$R_8$ and $R_9$,

considered together, and jointly with the nitrogen atom they are linked to, form a cyclic structure of from 5 to 12 members, optionally containing a futher heteroatom selected from the group consisting of oxygen and nitrogen;

$R_7$ represents a hydrogen atom or a halogen atom (fluorine, chlorine or bromine), or a radical selected from among: linear or branched ($C_1$ -$C_5$)-alkyl, ($C_1$-$C_5$)-alkoxy, cyano, mercapto, carboxylate ester with 1-3 carbon atoms in the ester moiety, or $R_7$ represents a fused aromatic or heterocyclic ring; and

X represents either =CH- or =N-.

3. Illuminometer according to the preceding claim, in which the photochromatic substances are selected in particular from among the following: 1,3,3,5,6-pentamethyl-spiro-{indolino-2,3'-[3H]-naphtho-(2,1-b)-(1,4)-oxazine}; 1,3,3-trimethyl-spiro-{indolino-2,3'-[3H]-naphtho-(2,1-b)-(1,4)-oxazine}; 1,3,3-trimethyl-spiro-{indolino-6'-(1-piperidyl)-2,3'-[3H]-naphtho-(2,1-b)-(1,4)-oxazine}; 1,3,3-trimethyl-spiro-{indolino-6'-(1-morpholyl)-2,3'-[3H]-naphtho-(2,1-b)-(1,4)-oxazine}; 1,3,3,4,5- or 1,3,3,5,6-pentamethyl-spiro-{indolino-6'-(1-piperidyl)-2,3'-[3H]-naphtho-(2,1-b)-(1,4)-oxazine}; and 1,3,3-trimethyl-spiro-[indolino-6'-(1-piperidyl)-9'-methoxy]-2,3'-[3H]-naphtho-(2,1-b)-(1,4)-oxazine.

**4.** Illuminometer according to claim 1 or 2, in which the polymeric material is an organic polymer selected from the group consisting:

- polypropylene and polyethylene;
- rigid or plastified poly(vinyl chloride);
- cellulose esters: acetate, acetate-butyrate, etc.;
- polystyrene;
- ethylene-vinyl acetate;
- poly(methyl methacrylate);
- polymer of diethyleneglycol-bis(allyl carbonate) (also known as "RAV 7");
- polycarbonate;
- polyurethane.

European Patent Office

# EUROPEAN SEARCH REPORT

Application Number

**EP 90 20 3497**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y | EP-A-0 321 563 (NISSAN MOTOR CO.)<br>* page 126, lines 5 - 9; claims *<br>- - - | 1,2-4 | C 08 K 5/357<br>C 09 K 9/02<br>G 01 J 1/02<br>G 03 C 1/73 |
| Y,D | EP-A-0 315 224 (ENICHEM SYNTHESIS S.P.A.)<br>* pages 6 - 7; claims *<br>- - - - - | 2-4 | |
| | | | **TECHNICAL FIELDS SEARCHED (Int. Cl.5)** |
| | | | C 08 K<br>C 08 L<br>C 09 K<br>G 03 C |

The present search report has been drawn up for all claims

| Place of search | Date of completion of search | Examiner |
|---|---|---|
| The Hague | 22 May 91 | HOFFMANN K.W. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document